(19) Europäisches Patentamt
European Patent Office
Office européen des brevets

(11) **EP 4 741 087 A1**

(12) **EUROPEAN PATENT APPLICATION**
published in accordance with Art. 153(4) EPC

(43) Date of publication:
**13.05.2026 Bulletin 2026/20**

(21) Application number: **24835878.0**

(22) Date of filing: **14.06.2024**

(51) International Patent Classification (IPC):
***B23B 51/00*** (2006.01)

(52) Cooperative Patent Classification (CPC):
**B23B 51/0011; B23B 51/00; B23B 51/02;**
B23B 2251/046; B23B 2251/408

(86) International application number:
**PCT/JP2024/021696**

(87) International publication number:
**WO 2025/009363 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.07.2023 PCT/JP2023/025141**

(71) Applicant: **Sumitomo Electric Hardmetal Corp.
Itami-shi, Hyogo 664-0016 (JP)**

(72) Inventors:
• **MIYAGAWA, Teppei**
**Itami-shi, Hyogo 664-0016 (JP)**
• **MATSUBARA, Kouki**
**Itami-shi, Hyogo 664-0016 (JP)**

(74) Representative: **Boult Wade Tennant LLP
Salisbury Square House
8 Salisbury Square
London EC4Y 8AP (GB)**

(54) **DRILL**

(57)  When viewed along a central axis, a start point phase of a first discharge flute falls within a range of not less than +10° and not more than +90° with respect to a central edge, an end point phase of the first discharge flute falls within a range of not less than -40° and not more than 0° with respect to the central edge, a start point phase of a second discharge flute falls within a range of not less than +10° and not more than +90° with respect to an outer peripheral edge, and an end point phase of the second discharge flute falls within a range of not less than -40° and not more than 0° with respect to the outer peripheral edge. The first discharge flute includes a first front flute portion, and a first rear flute portion contiguous to the first front flute portion. The second discharge flute includes a second front flute portion, and a second rear flute portion contiguous to the second front flute portion. A helix angle of the first front flute portion monotonously decreases toward the first rear flute portion. A helix angle of the second front flute portion monotonously decreases toward the second rear flute portion. A helix angle of each of the first rear flute portion and the second rear flute portion is 0°.

FIG.1

# EP 4 741 087 A1

**Description**

TECHNICAL FIELD

The present disclosure relates to a drill. The present application claims priority based on International Application No. PCT/JP2023/025141 filed on July 6, 2023, the entire contents of which are incorporated herein by reference.

BACKGROUND ART

WO 2013/018764 (PTL 1) describes a cutting tool holder having a helical flute portion and a linear flute portion. The helical flute portion intersects a central axis of rotation at a certain angle when seen in a side view.

CITATION LIST

PATENT LITERATURE

PTL 1: WO 2013/018764

SUMMARY OF INVENTION

A drill according to the present disclosure rotates about a central axis, and includes a first cutting insert, a second cutting insert, and a body. The first cutting insert has a central edge. The second cutting insert has an outer peripheral edge. The first cutting insert and the second cutting insert are attached to the body. The body is provided with a first discharge flute and a second discharge flute. The first discharge flute discharges chips cut by the central edge. The second discharge flute discharges chips cut by the outer peripheral edge. When viewed along the central axis, a start point phase of the first discharge flute falls within a range of not less than +10° and not more than +90° with respect to the central edge, an end point phase of the first discharge flute falls within a range of not less than -40° and not more than 0° with respect to the central edge, a start point phase of the second discharge flute falls within a range of not less than +10° and not more than +90° with respect to the outer peripheral edge, and an end point phase of the second discharge flute falls within a range of not less than -40° and not more than 0° with respect to the outer peripheral edge. The first discharge flute includes a first front flute portion, and a first rear flute portion contiguous to the first front flute portion. The second discharge flute includes a second front flute portion, and a second rear flute portion contiguous to the second front flute portion. A helix angle of the first front flute portion monotonously decreases toward the first rear flute portion. A helix angle of the second front flute portion monotonously decreases toward the second rear flute portion. A helix angle of each of the first rear flute portion and the second rear flute portion is 0°. At a boundary between the first front flute portion and the first rear flute portion, values each calculated by dividing an amount of change in the helix angle of the first discharge flute by an amount of change in position in a direction along the central axis are continuous. At a boundary between the second front flute portion and the second rear flute portion, values each calculated by dividing an amount of change in the helix angle of the second discharge flute by an amount of change in position in the direction along the central axis are continuous. The body is provided with a first pocket portion that is contiguous to the first discharge flute and that is located forward with respect to a rotational direction of the first cutting insert. In the direction along the central axis, a distance from a front end of the first cutting insert to a rear end of the first pocket portion is greater than or equal to 1.5 times a tool diameter.

BRIEF DESCRIPTION OF DRAWINGS

Fig. 1 is a first schematic perspective view showing a configuration of a drill according to the present embodiment.
Fig. 2 is a second schematic perspective view showing the configuration of the drill according to the present embodiment.
Fig. 3 is a schematic left side view showing the configuration of the drill according to the present embodiment.
Fig. 4A is a first schematic front view showing the configuration of the drill according to the present embodiment.
Fig. 4B is a second schematic front view showing the configuration of the drill according to the present embodiment.
Fig. 5 is a schematic cross-sectional view taken along a line V-V shown in Fig. 4A.
Fig. 6 is a schematic cross-sectional view taken along a line VI-VI shown in Fig. 4A.
Fig. 7 is a schematic cross-sectional view taken along a line VII-VII shown in Fig. 4A.
Fig. 8 is a schematic cross-sectional view taken along a line VIII-VIII shown in Fig. 4A.
Fig. 9A is a first schematic rear view showing the configuration of the drill according to the present embodiment.

Fig. 9B is a second schematic rear view showing the configuration of the drill according to the present embodiment.

Fig. 10 is a schematic cross-sectional view taken along a line X-X shown in Fig. 9A.

Fig. 11 is a schematic cross-sectional view taken along a line XI-XI shown in Fig. 9A.

Fig. 12 shows an imaginary plane obtained by rotating and projecting each of a first cutting insert and a second cutting insert.

Fig. 13 shows the imaginary plane obtained by rotating and projecting each of the first cutting insert and the second cutting insert.

Fig. 14 is a diagram showing an amount of displacement of each of drills according to Samples 1 to 9.

Fig. 15 is a diagram showing a height profile of a wall surface of a hole formed with the drill according to Sample 4.

Fig. 16 is a diagram showing a height profile of a wall surface of a hole formed with a drill according to Sample 10.

Fig. 17 is a schematic cross-sectional view showing a shape of a hole formed with each of drills 100 according to Samples 4, 11 and 12.

DETAILED DESCRIPTION

[Problem to be Solved by the Present Disclosure]

An object of the present disclosure is to provide a drill capable of improving chip discharge performance while suppressing a reduction in stiffness.

[Advantageous Effect of the Present Disclosure]

According to the present disclosure, a drill capable of improving chip discharge performance while suppressing a reduction in stiffness can be provided.

[Description of Embodiments of the Present Disclosure]

First, embodiments of the present disclosure will be listed and described.

(1) A drill 100 according to the present disclosure rotates about a central axis A, and includes a first cutting insert 10, a second cutting insert 20, and a body 9. First cutting insert 10 has a central edge 11. Second cutting insert 20 has an outer peripheral edge 21. First cutting insert 10 and second cutting insert 20 are attached to body 9. Body 9 is provided with a first discharge flute 1 and a second discharge flute 2. First discharge flute 1 discharges chips cut by central edge 11. Second discharge flute 2 discharges chips cut by outer peripheral edge 21. When viewed along central axis A, a start point phase of first discharge flute 1 falls within a range of not less than +10° and not more than +90° with respect to central edge 11, an end point phase of first discharge flute 1 falls within a range of not less than -40° and not more than 0° with respect to central edge 11, a start point phase of second discharge flute 2 falls within a range of not less than +10° and not more than +90° with respect to outer peripheral edge 21, and an end point phase of second discharge flute 2 falls within a range of not less than -40° and not more than 0° with respect to outer peripheral edge 21. First discharge flute 1 includes a first front flute portion 51, and a first rear flute portion 52 contiguous to first front flute portion 51. Second discharge flute 2 includes a second front flute portion 61, and a second rear flute portion 62 contiguous to second front flute portion 61. A helix angle of first front flute portion 51 monotonously decreases toward first rear flute portion 52. A helix angle of second front flute portion 61 monotonously decreases toward second rear flute portion 62. A helix angle of each of first rear flute portion 52 and second rear flute portion 62 is 0°. At a boundary between first front flute portion 51 and first rear flute portion 52, values each calculated by dividing an amount of change in the helix angle of first discharge flute 1 by an amount of change in position in a direction along central axis A are continuous. At a boundary between second front flute portion 61 and second rear flute portion 62, values each calculated by dividing an amount of change in the helix angle of second discharge flute 2 by an amount of change in position in the direction along central axis A are continuous. Body 9 is provided with a first pocket portion 32 that is contiguous to first discharge flute 1 and that is located forward with respect to a rotational direction of first cutting insert 10. In the direction along central axis A, a distance from a front end of first cutting insert 10 to a rear end of first pocket portion 32 is greater than or equal to 1.5 times a tool diameter.

(2) In drill 100 according to (1), in the direction along central axis A, each of first discharge flute 1 and second discharge flute 2 may have a length greater than or equal to two times and less than or equal to eight times the tool diameter.

(3) In drill 100 according to (1) or (2), in the direction along central axis A, when a first front length denotes a length of first front flute portion 51, a first rear length denotes a length of first rear flute portion 52, a second front length denotes a length of second front flute portion 61, and a second rear length denotes a length of second rear flute portion 62, a value calculated by dividing the first front length by the first rear length may be not less than 0.3 and not more than 3.0, and a value calculated by dividing the second front length by the second rear length may be not less than 0.3 and not more than 3.0.

(4) In drill 100 according to any one of (1) to (3), in a cross section perpendicular to central axis A, when a first front area denotes a cross-sectional area of first front flute portion 51, a first rear area denotes a cross-sectional area of first rear flute portion 52, a second front area denotes a cross-sectional area of second front flute portion 61, and a second rear area denotes a cross-sectional area of second rear flute portion 62, a value calculated by dividing the first front area by the first rear area may be not less than 1.01 and not more than 1.02, and a value calculated by dividing the second front area by the second rear area may be not less than 1.01 and not more than 1.02.

(5) In drill 100 according to any one of (1) to (4), in a cross section perpendicular to central axis A, first discharge flute 1 may have a cross-sectional area greater than a cross-sectional area of second discharge flute 2.

(6) In drill 100 according to any one of (1) to (5), in an imaginary plane obtained by rotating and projecting each of first cutting insert 10 and second cutting insert 20, when a first position 71 denotes a foremost end position of central edge 11, a second position 72 denotes an intersection of central axis A and central edge 11, and a third position 73 denotes an intersection of an imaginary line segment extending from second position 72 in a direction perpendicular to central axis A and outer peripheral edge 21, a distance from central axis A to first position 71 in a radial direction extending radially from central axis A may be not less than 30% and not more than 40% of half the tool diameter, and a distance from central axis A to third position 73 in the radial direction may be not less than 80% and not more than 100% of half the tool diameter.

(7) In drill 100 according to (6), in the imaginary plane, when a fourth position 74 denotes an intersection of central edge 11 and outer peripheral edge 21, a distance from central axis A to fourth position 74 in the radial direction may be greater than a distance from fourth position 74 to an outermost peripheral end of outer peripheral edge 21 in the radial direction.

(8) In drill 100 according to (6) or (7), in the imaginary plane, a sine of an angle formed by a line perpendicular to central axis A and a tangent of central edge 11 at second position 72 may be less than or equal to a value calculated by multiplying the tool diameter by 0.0070/mm. A unit of the angle is °, and a unit of the tool diameter is mm.

(9) In drill 100 according to any one of (1) to (8), body 9 may be provided with a second pocket portion 42 that is contiguous to second discharge flute 2 and that is located forward with respect to the rotational direction of second cutting insert 20. In the direction along central axis A, the rear end of first pocket portion 32 may be located rearward with respect to an axial direction of a rear end of second pocket portion 42.

[Details of Embodiments of the Present Disclosure]

Next, details of embodiments of the present disclosure (hereinafter also referred to as the present embodiment) will be described with reference to the drawings. In the drawings below, the same or corresponding parts are denoted by the same reference characters and the description thereof will not be repeated.

First, a configuration of a drill 100 according to the present embodiment is described.

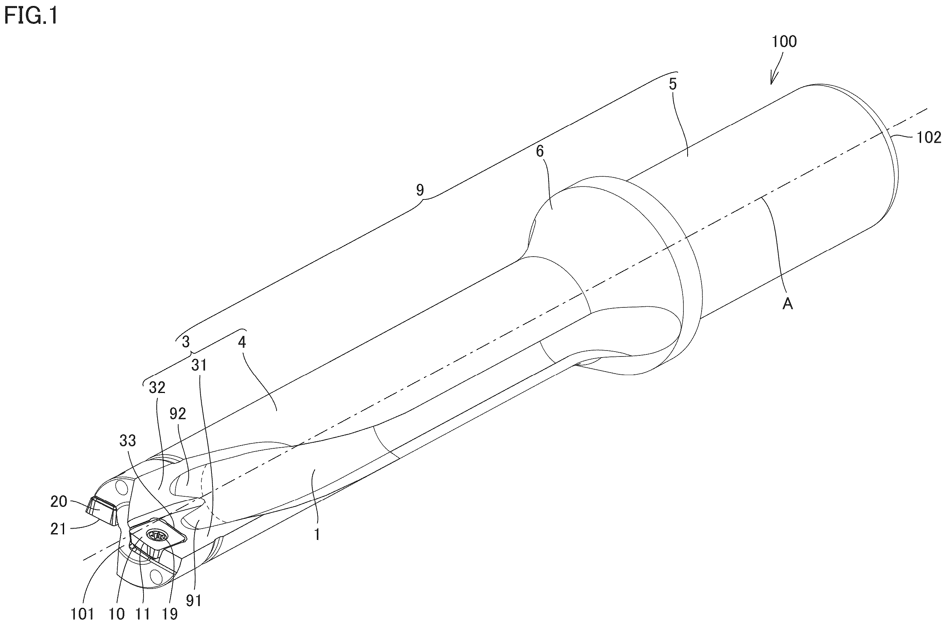

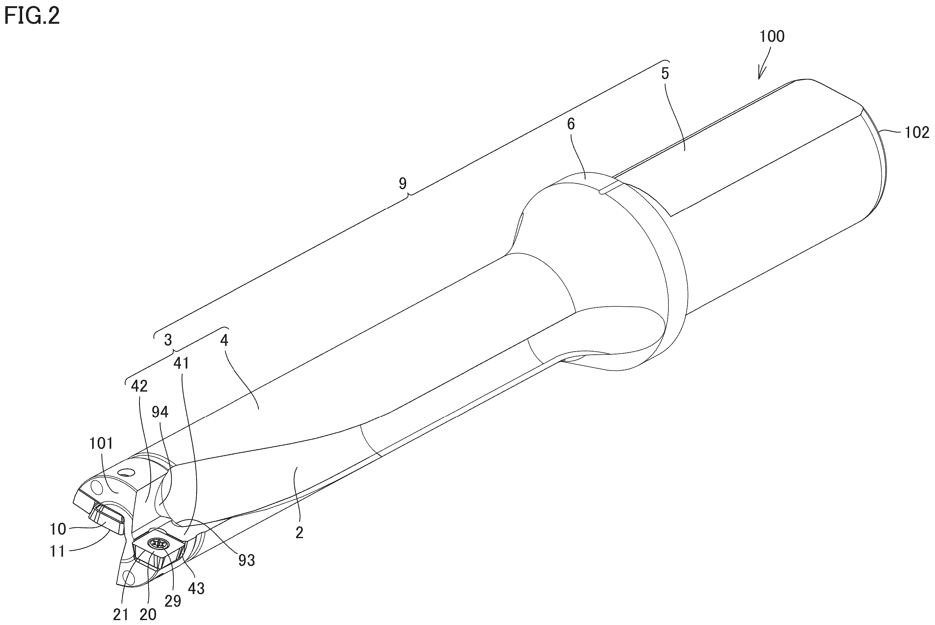

Fig. 1 is a first schematic perspective view showing the configuration of drill 100 according to the present embodiment. Fig. 2 is a second schematic perspective view showing the configuration of drill 100 according to the present embodiment. As shown in Figs. 1 and 2, drill 100 according to the present embodiment includes a first cutting insert 10, a second cutting insert 20, a body 9, a central edge attachment screw 19, and an outer peripheral edge attachment screw 29. First cutting insert 10 has a central edge 11. Second cutting insert 20 has an outer peripheral edge 21. First cutting insert 10 and second cutting insert 20 are attached to body 9. First cutting insert 10 is attached to body 9 with central edge attachment screw 19. Second cutting insert 20 is attached to body 9 with outer peripheral edge attachment screw 29.

Drill 100 is rotatable about a central axis A. Body 9 is provided with a first discharge flute 1 and a second discharge flute 2. First discharge flute 1 discharges chips cut by central edge 11. Second discharge flute 2 discharges chips cut by outer peripheral edge 21.

As shown in Fig. 1, body 9 includes a first body region 3, a second body region 6, and a shank 5. A front end surface 101 of body 9 is defined by first body region 3. Front end surface 101 of body 9 is a portion facing a workpiece. Second body region 6 is contiguous to each of first body region 3 and shank 5. Second body region 6 is located between first body region 3 and shank 5. A rear end surface 102 of body 9 is located opposite to front end surface 101. Rear end surface 102 of body 9 is defined by shank 5. Shank 5 is a portion attached to a device that rotates drill 100.

In the present specification, a direction parallel to central axis A and from rear end surface 102 toward front end surface 101 is referred to as "forward with respect to an axial direction." Conversely, a direction parallel to central axis A and from front end surface 101 toward rear end surface 102 is referred to as "rearward with respect to the axial direction." In a plane perpendicular to central axis A, a direction extending radially from central axis A is referred to as a radial direction.

As shown in Fig. 1, a first insert placement surface portion 31 and a first pocket portion 32 are provided in first body region 3. First insert placement surface portion 31 is provided with a first insert placement groove 33. First cutting insert 10 is placed in first insert placement groove 33. First pocket portion 32 is located forward with respect to a rotational direction of first cutting insert 10. First pocket portion 32 is contiguous to first discharge flute 1. At least a part of first pocket portion 32 is located forward with respect to the axial direction of first discharge flute 1. First pocket portion 32 is contiguous to front end surface 101.

As shown in Fig. 2, a second insert placement surface portion 41 and a second pocket portion 42 are provided in first body region 3. Second insert placement surface portion 41 is provided with a second insert placement groove 43. Second cutting insert 20 is placed in second insert placement groove 43. Second pocket portion 42 is located forward with respect to the rotational direction of second cutting insert 20. Second pocket portion 42 is contiguous to second discharge flute 2. At least a part of second pocket portion 42 is located forward with respect to the axial direction of second discharge flute 2. Second pocket portion 42 is contiguous to front end surface 101.

As shown in Figs. 1 and 2, first body region 3 has a first outer peripheral surface 4. Each of first discharge flute 1 and second discharge flute 2 is externally exposed at first outer peripheral surface 4. Each of first insert placement surface portion 31 and first pocket portion 32 may be contiguous to first outer peripheral surface 4. Similarly, each of second insert placement surface portion 41 and second pocket portion 42 may be contiguous to first outer peripheral surface 4.

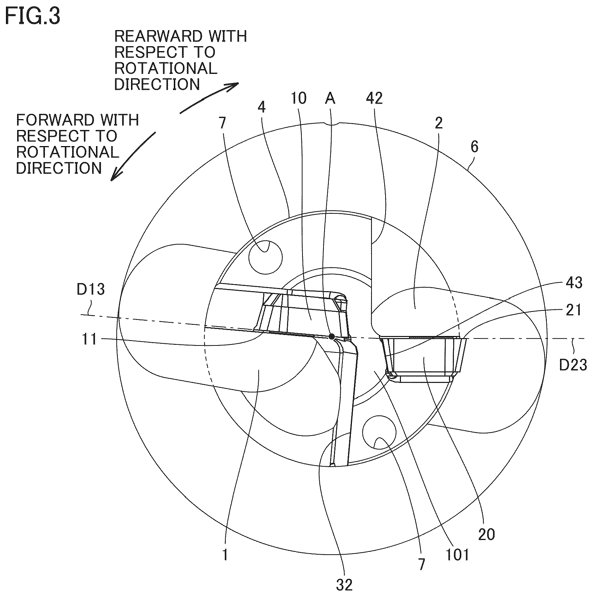

Fig. 3 is a schematic left side view showing the configuration of drill 100 according to the present embodiment. As shown in Fig. 3, when viewed in a direction along central axis A, first outer peripheral surface 4 has an arc shape. An outer peripheral surface of second body region 6 surrounds first outer peripheral surface 4. When viewed in the direction along central axis A, the outer peripheral surface of second body region 6 has a substantially circular shape. Body 9 may be provided with two coolant supply holes 7. Two coolant supply holes 7 are exposed at front end surface 101 of body 9.

First cutting insert 10 is disposed closer to central axis A as compared to second cutting insert 20. When viewed in the direction along central axis A, first cutting insert 10 may intersect central axis A. More specifically, when viewed in the direction along central axis A, central edge 11 of first cutting insert 10 may intersect central axis A. Second cutting insert 20 is disposed farther from central axis A as compared to first cutting insert 10. When viewed in the direction along central axis A, second cutting insert 20 is away from central axis A. More specifically, when viewed in the direction along central axis A, outer peripheral edge 21 of second cutting insert 20 does not intersect central axis A.

As shown in Fig. 3, when viewed in the direction along central axis A, a thirteenth half line D13 denotes a half line connecting central axis A and an outermost peripheral end portion of central edge 11 and extending radially from central axis A. When viewed in the direction along central axis A, an angle formed by thirteenth half line D13 and a ridgeline between first pocket portion 32 and front end surface 101 is not less than 45° and not more than 120°, for example. Similarly, when viewed in the direction along central axis A, a twenty-third half line D23 denotes a half line connecting central axis A and an outermost peripheral end portion of outer peripheral edge 21 and extending radially from central axis A. When viewed in the direction along central axis A, an angle formed by twenty-third half line D23 and a ridgeline between second pocket portion 42 and front end surface 101 is not less than 45° and not more than 120°, for example.

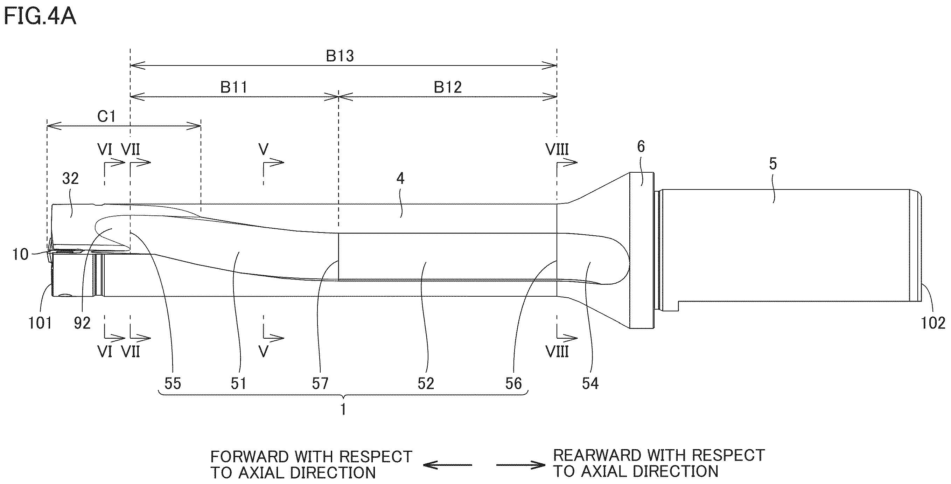

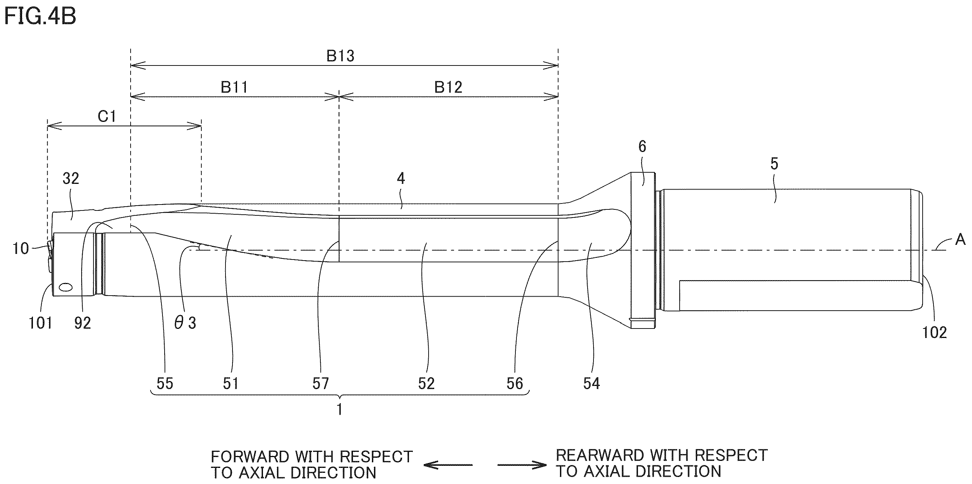

Figs. 4A and 4B are schematic front views showing the configuration of drill 100 according to the present embodiment. As shown in Figs. 4A and 4B, first discharge flute 1 includes a first front flute portion 51 and a first rear flute portion 52. First rear flute portion 52 is contiguous to first front flute portion 51. First rear flute portion 52 is located rearward with respect to the axial direction of first front flute portion 51. A helix angle θ3 of first front flute portion 51 monotonously decreases toward first rear flute portion 52. Helix angle θ3 of first rear flute portion 52 is 0°. Stated from a different perspective, first rear flute portion 52 extends along central axis A.

At a boundary (a first boundary 57) between first front flute portion 51 and first rear flute portion 52, values each calculated by dividing an amount of change in helix angle θ3 of first discharge flute 1 by an amount of change in position in the direction along central axis A are continuous. At the boundary (first boundary 57) between first front flute portion 51 and first rear flute portion 52, helix angle θ3 changes gradually. Specifically, in a region from the boundary (first boundary 57) between first front flute portion 51 and first rear flute portion 52 to a position that is forward with respect to the axial direction by a distance of a tool diameter × 1.0, values each calculated by dividing the amount of change in helix angle θ3 of first discharge flute 1 by the amount of change in position (that is, the tool diameter × 1.0) in the direction along central axis A are not more than (2.0)°/mm.

In the direction along central axis A, a first front length B11 denotes a length of first front flute portion 51, and a first rear length B12 denotes a length of first rear flute portion 52. A value calculated by dividing first front length B11 by first rear length B12 is not less than 0.3 and not more than 3.0, for example. The value calculated by dividing first front length B11 by first rear length B12 may be not less than 0.5 and not more than 2.0, or not less than 0.7 and not more than 1.5, for example.

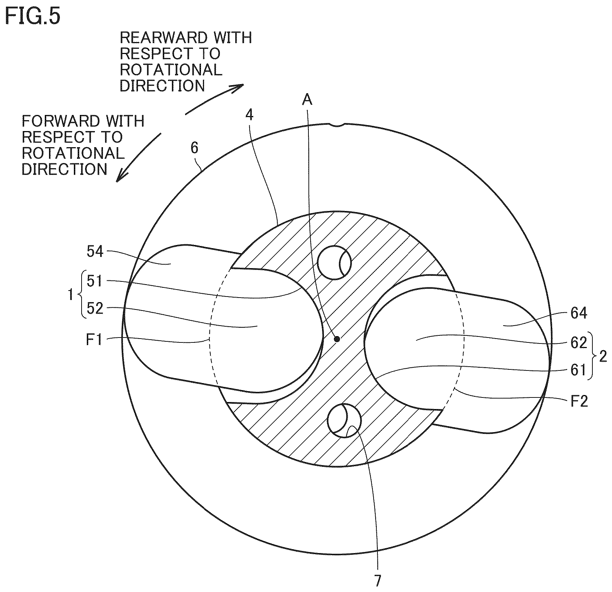

Fig. 5 is a schematic cross-sectional view taken along a line V-V shown in Fig. 4A. The cross-sectional view shown in Fig. 5 is perpendicular to central axis A. In the cross section perpendicular to central axis A, first discharge flute 1 may have a cross-sectional area greater than a cross-sectional area of second discharge flute 2. The cross-sectional area of first discharge flute 1 refers to the area of a region surrounded by a surface of body 9 defining first discharge flute 1 and a first imaginary arc F1 along first outer peripheral surface 4. Similarly, the cross-sectional area of second discharge flute 2 refers to the area of a region surrounded by a surface of body 9 defining second discharge flute 2 and a second imaginary arc F2 along first outer peripheral surface 4. Each of first imaginary arc F1 and second imaginary arc F2 has a radius of curvature substantially equal to a radius of curvature of first outer peripheral surface 4.

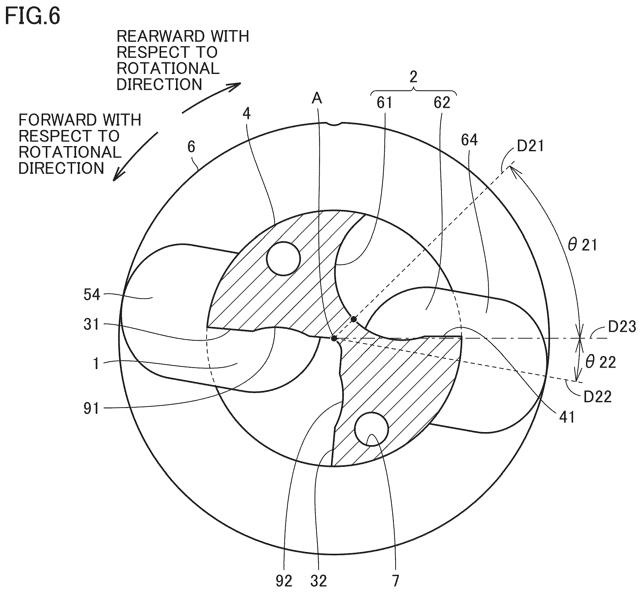

Fig. 6 is a schematic cross-sectional view taken along a line VI-VI shown in Fig. 4A. The cross-sectional view shown in Fig. 6 is perpendicular to central axis A. As shown in Figs. 1 and 6, body 9 is provided with a first front end flute portion 91 and a second front end flute portion 92. First front end flute portion 91 is provided on first insert placement surface portion 31. Second front end flute portion 92 is provided on first pocket portion 32. Second front end flute portion 92 is spaced apart from first front end flute portion 91.

As shown in Figs. 1 and 4A, in the axial direction, each of first front end flute portion 91 and second front end flute portion 92 is located forward of first front flute portion 51. Each of first front end flute portion 91 and second front end flute portion 92 is contiguous to first front flute portion 51. A position where first front end flute portion 91 and second front end flute portion 92 meet is a boundary between each of first front end flute portion 91 and second front end flute portion 92 and first front flute portion 51. Stated another way, the boundary between the position where first front end flute portion 91 and second front end flute portion 92 meet and first front flute portion 51 is a start point position of first discharge flute 1.

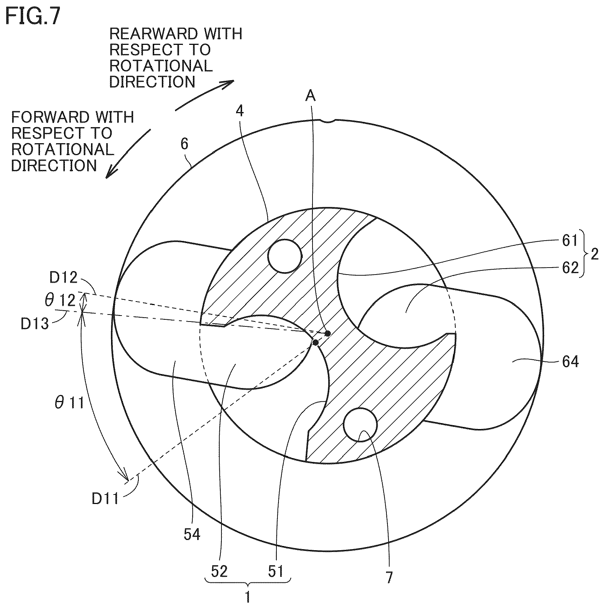

Fig. 7 is a schematic cross-sectional view taken along a line VII-VII shown in Fig. 4A. The cross-sectional view shown in Fig. 7 is perpendicular to central axis A. The position in the axial direction of the cross-sectional view shown in Fig. 7 corresponds to the start point position (a first start point position 55) of first discharge flute 1. An eleventh half line D11 denotes a half line passing through a bottom of first discharge flute 1 and central axis A at first start point position 55. The bottom of first discharge flute 1 is a point on first discharge flute 1 that is closest to central axis A in the cross section perpendicular to central axis A. A start point phase of first discharge flute 1 corresponds to a phase of eleventh half line D11. A phase of central edge 11 corresponds to a phase of thirteenth half line D13. The phase of central edge 11 is 0°.

As shown in Fig. 7, when viewed along central axis A, the start point phase (a first start point phase θ11) of first discharge flute 1 falls within a range of not less than +10° and not more than +90° with respect to central edge 11. When viewed along central axis A, first start point phase θ11 may fall within a range of not less than +20° and not more than +80° with respect to central edge 11, or within a range of not less than +30° and not more than +70° with respect to central edge 11. In the present specification, "forward with respect to the rotational direction" is a positive phase. Conversely, "rearward with respect to the rotational direction" is a negative phase. The phase is N × 360° when the same phase is obtained after N rotations in the rotational direction (where N is an integer). For example, the phase is +360° when the same phase is obtained after one rotation forward with respect to the rotational direction, and the phase is +720° when the same phase is obtained after two rotations with respect to the rotational direction.

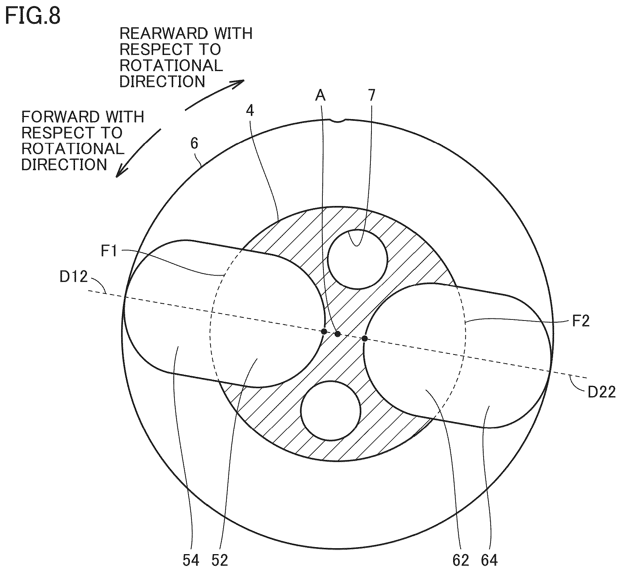

Fig. 8 is a schematic cross-sectional view taken along a line VIII-VIII shown in Fig. 4A. The cross-sectional view shown in Fig. 8 is perpendicular to central axis A. The position in the axial direction of the cross-sectional view shown in Fig. 8 corresponds to an end point position (a first end point position 56) of first discharge flute 1. A twelfth half line D12 denotes a half line passing through the bottom of first discharge flute 1 and central axis A at first end point position 56. An end point phase of first discharge flute 1 corresponds to a phase of twelfth half line D12.

As shown in Figs. 7 and 8, when viewed along central axis A, the end point phase (a first end point phase θ12) of first discharge flute 1 falls within a range of not less than -40° and not more than 0° with respect to central edge 11. When viewed along central axis A, first end point phase θ12 may fall within a range of not less than -30° and not more than 0° with respect to central edge 11, or within a range of not less than -20° and not more than 0° with respect to central edge 11.

In the axial direction, first end point position 56 may be the same as an end point position (a second end point position 66) of second discharge flute 2. A twenty-second half line D22 denotes a half line passing through a bottom of second discharge flute 2 and central axis A at second end point position 66. The bottom of second discharge flute 2 is a point on second discharge flute 2 that is closest to central axis A in the cross section perpendicular to central axis A. An end point phase of second discharge flute 2 corresponds to a phase of twenty-second half line D22.

As shown in Fig. 8, when viewed along central axis A, twenty-second half line D22 and twelfth half line D12 may be located on the same line. Stated from a different perspective, the phase of twenty-second half line D22 may be at a position rotated and shifted +180° with respect to twelfth half line D12. As shown in Fig. 8, at the end point position of first discharge flute 1, a distance between the bottom of second discharge flute 2 and central axis A is greater than a distance between the bottom of first discharge flute 1 and central axis A. Stated from a different perspective, at the end point position of first discharge flute 1, second discharge flute 2 has a cross-sectional area smaller than a cross-sectional area of first discharge flute 1.

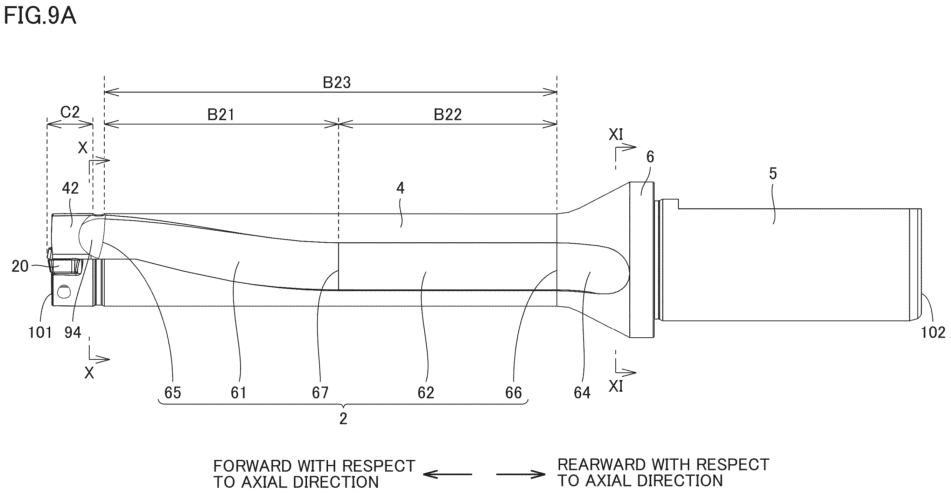

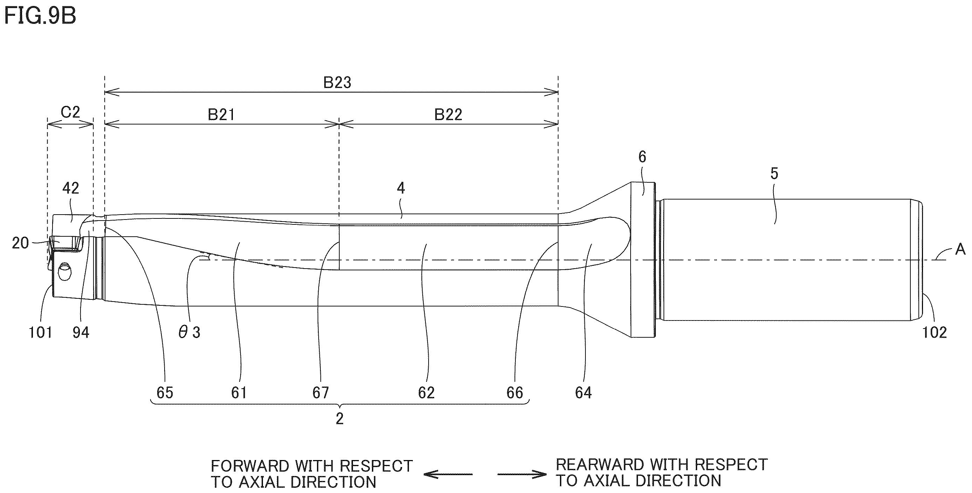

Figs. 9A and 9B are schematic rear views showing the configuration of drill 100 according to the present embodiment. As shown in Figs. 9A and 9B, second discharge flute 2 includes a second front flute portion 61 and a second rear flute portion 62. Second rear flute portion 62 is contiguous to second front flute portion 61. Second rear flute portion 62 is located rearward with respect to the axial direction of second front flute portion 61. Helix angle θ3 of second front flute portion 61 monotonously decreases toward second rear flute portion 62. Helix angle θ3 of second rear flute portion 62 is 0°. Stated from a different perspective, second rear flute portion 62 extends along central axis A.

At a boundary (a second boundary 67) between second front flute portion 61 and second rear flute portion 62, values each calculated by dividing an amount of change in helix angle θ3 of second discharge flute 2 by an amount of change in position in the direction along central axis A are continuous. At the boundary (second boundary 67) between second front flute portion 61 and second rear flute portion 62, helix angle θ3 changes gradually. Specifically, in a region from the boundary (second boundary 67) between second front flute portion 61 and second rear flute portion 62 to a position that is forward with respect to the axial direction by a distance of the tool diameter $\times$ 1.0, values each calculated by dividing the amount of change in helix angle $\theta3$ of second discharge flute 2 by the amount of change in position (that is, the tool diameter $\times$ 1.0) in the direction along central axis A are not more than 2.0°°/mm.

In the direction along central axis A, a second front length B21 denotes a length of second front flute portion 61, and a second rear length B22 denotes a length of second rear flute portion 62. A value calculated by dividing second front length B21 by second rear length B22 is not less than 0.3 and not more than 3.0, for example. The value calculated by dividing second front length B21 by second rear length B22 may be not less than 0.5 and not more than 2.0, or not less than 0.7 and not more than 1.5, for example.

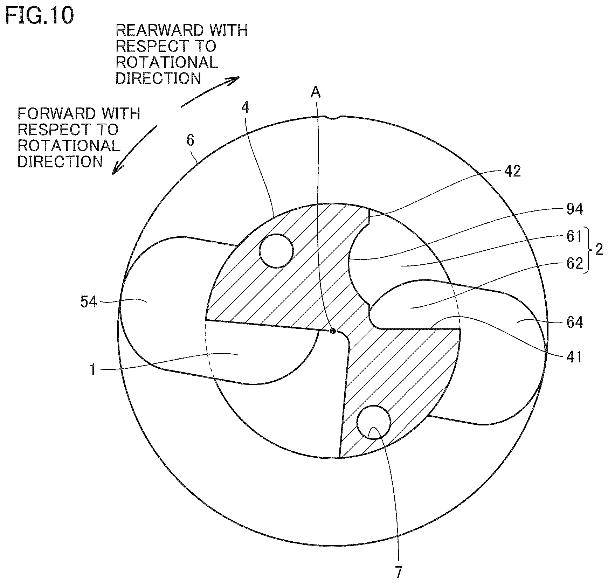

Fig. 10 is a schematic cross-sectional view taken along a line X-X shown in Fig. 9A. The cross-sectional view shown in Fig. 10 is perpendicular to central axis A. As shown in Figs. 2 and 10, body 9 is provided with a third front end flute portion 93 and a fourth front end flute portion 94. Third front end flute portion 93 is provided on second insert placement surface portion 41. Fourth front end flute portion 94 is provided on second pocket portion 42. Fourth front end flute portion 94 is spaced apart from third front end flute portion 93.

As shown in Fig. 2, in the axial direction, each of third front end flute portion 93 and fourth front end flute portion 94 is located forward of second discharge flute 2. Each of third front end flute portion 93 and fourth front end flute portion 94 is contiguous to second front flute portion 61. A position where third front end flute portion 93 and fourth front end flute portion 94 meet is a boundary between each of third front end flute portion 93 and fourth front end flute portion 94 and second front flute portion 61. Stated another way, the boundary between the position where third front end flute portion 93 and fourth front end flute portion 94 meet and second front flute portion 61 is a start point position of second discharge flute 2.

The position in the axial direction of the cross-sectional view shown in Fig. 6 corresponds to the start point position (a second start point position 65) of second discharge flute 2. A twenty-first half line D21 denotes a half line passing through the bottom of second discharge flute 2 and central axis A at second start point position 65. A start point phase of second discharge flute 2 corresponds to a phase of twenty-first half line D21. A phase of outer peripheral edge 21 corresponds to a phase of twenty-third half line D23. The phase of outer peripheral edge 21 is 0°.

As shown in Fig. 6, when viewed along central axis A, the start point phase (a second start point phase $\theta21$) of second discharge flute 2 falls within a range of not less than +10° and not more than +90° with respect to outer peripheral edge 21. Second start point phase $\theta21$ may fall within a range of not less than +20° and not more than +80° with respect to outer peripheral edge 21, or within a range of not less than +30° and not more than +70° with respect to outer peripheral edge 21.

As shown in Figs. 6 and 8, the end point phase (a second end point phase $\theta22$) of second discharge flute 2 falls within a range of not less than -40° and not more than 0° with respect to outer peripheral edge 21. Second end point phase $\theta22$ may fall within a range of not less than -30° and not more than 0° with respect to outer peripheral edge 21, or within a range of not less than -20° and not more than 0° with respect to outer peripheral edge 21.

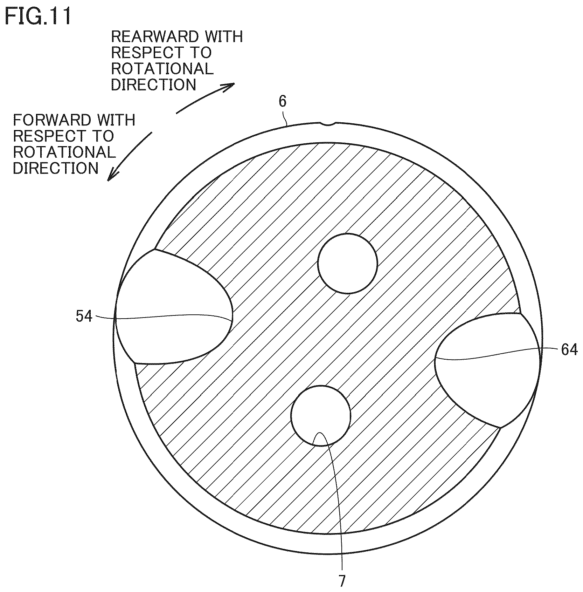

Fig. 11 is a schematic cross-sectional view taken along a line XI-XI shown in Fig. 9A. The cross-sectional view shown in Fig. 11 is perpendicular to central axis A. Body 9 is provided with a first rear end flute portion 54 and a second rear end flute portion 64. As shown in Fig. 9A, more specifically, each of first rear end flute portion 54 and second rear end flute portion 64 is provided in second body region 6. Second body region 6 has a diameter greater than a diameter of first body region 3. Second body region 6 includes a portion having a diameter that increases rearward with respect to the axial direction.

First rear end flute portion 54 is contiguous to first rear flute portion 52. First rear end flute portion 54 is located rearward with respect to the axial direction of first rear flute portion 52. As shown in Figs. 8 and 11, in the cross section perpendicular to central axis A, first rear end flute portion 54 has a cross-sectional area smaller than a cross-sectional area of first rear flute portion 52. The cross-sectional area of first rear end flute portion 54 in the cross section perpendicular to central axis A decreases rearward with respect to the axial direction.

Second rear end flute portion 64 is contiguous to second rear flute portion 62. Second rear end flute portion 64 is located rearward with respect to the axial direction of second rear flute portion 62. As shown in Figs. 8 and 11, in the cross section perpendicular to central axis A, second rear end flute portion 64 has a cross-sectional area smaller than a cross-sectional area of second rear flute portion 62. The cross-sectional area of second rear end flute portion 64 in the cross section perpendicular to central axis A decreases rearward with respect to the axial direction.

In the cross section perpendicular to central axis A, when a first front area denotes a cross-sectional area of first front flute portion 51 and a first rear area denotes the cross-sectional area of first rear flute portion 52, the first front area may be greater than the first rear area. A value calculated by dividing the first front area by the first rear area may be not less than 1.01 and not more than 1.02. The value calculated by dividing the first front area by the first rear area may be not less than 1.012 and not more than 1.018, or not less than 1.014 and not more than 1.016.

In the cross section perpendicular to central axis A, when a second front area denotes a cross-sectional area of second front flute portion 61 and a second rear area denotes the cross-sectional area of second rear flute portion 62, the second front area may be greater than the second rear area. A value calculated by dividing the second front area by the second rear area may be not less than 1.01 and not more than 1.02. The value calculated by dividing the second front area by the second rear area may be not less than 1.012 and not more than 1.018, or not less than 1.014 and not more than 1.016.

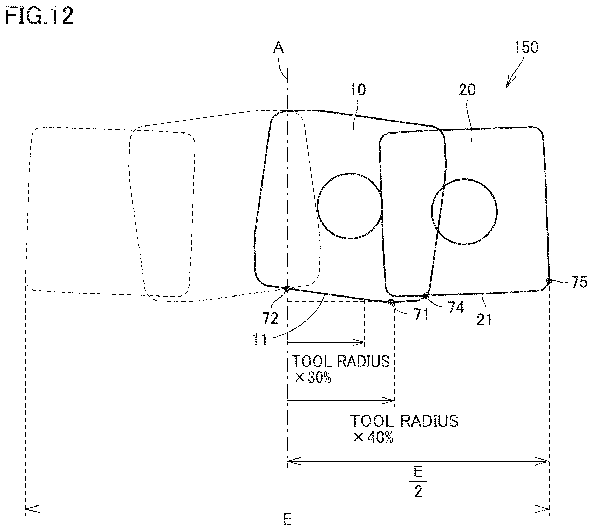

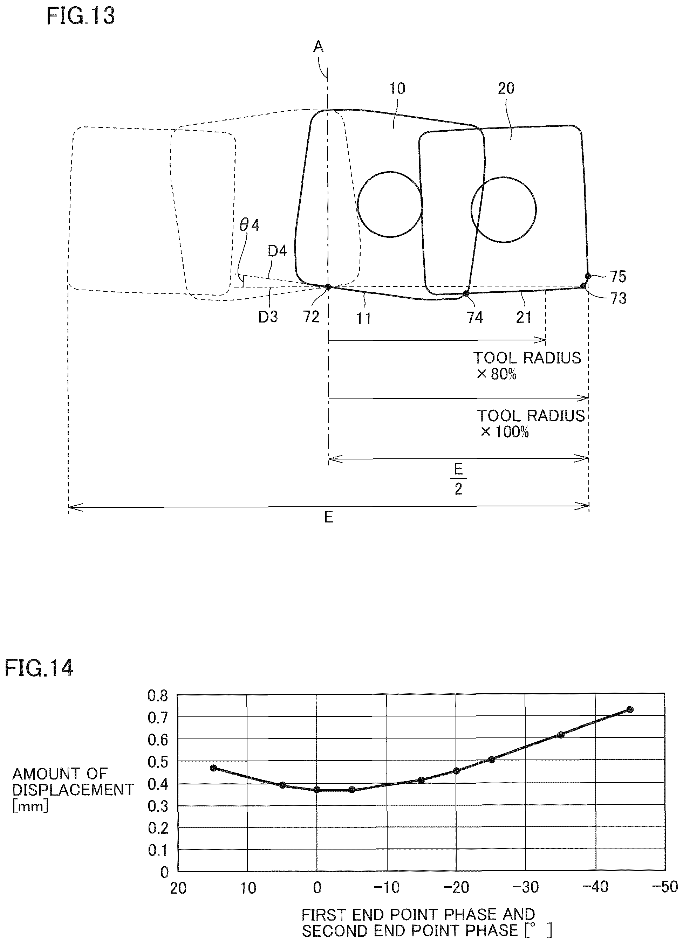

Figs. 12 and 13 show an imaginary plane obtained by rotating and projecting each of first cutting insert 10 and second cutting insert 20 about central axis A. As shown in Fig. 12, an imaginary plane 150 includes central axis A. In imaginary plane 150, a first position 71 denotes a foremost end position of central edge 11. First position 71 is located foremost in the axial direction. In imaginary plane 150, a second position 72 denotes an intersection of central axis A and central edge 11.

As shown in Fig. 13, in imaginary plane 150, a third position 73 denotes an intersection of an imaginary line segment extending from second position 72 in the direction perpendicular to central axis A and outer peripheral edge 21. A tool radius refers to a distance from central axis A to an outermost peripheral end of outer peripheral edge 21 in the radial direction. A fifth position 75 denotes the outermost peripheral end of outer peripheral edge 21. In other words, a tool diameter E is two times the distance from central axis A to fifth position 75 in the radial direction. Note that the radial direction refers to a direction extending radially from central axis A. The radial direction is orthogonal to central axis A.

As shown in Fig. 12, a distance from central axis A to first position 71 in the radial direction is not less than 30% and not more than 40% of the tool radius. The distance from central axis A to first position 71 in the radial direction may be not less than 23% and not more than 37% of the tool radius, or not less than 26% and not more than 34% of the tool radius.

As shown in Fig. 13, a distance from central axis A to third position 73 in the radial direction is not less than 80% and not more than 100% of the tool radius. The distance from central axis A to third position 73 in the radial direction may be not less than 84% and not more than 96% of the tool radius, or not less than 88% and not more than 92% of the tool radius.

In imaginary plane 150, a fourth position 74 denotes an intersection of central edge 11 and outer peripheral edge 21. A distance from central axis A to fourth position 74 in the radial direction may be greater than a distance from fourth position 74 to fifth position 75 in the radial direction. The distance from central axis A to fourth position 74 in the radial direction corresponds to an effective length of central edge 11 in the radial direction. The distance from fourth position 74 to fifth position 75 in the radial direction corresponds to an effective length of outer peripheral edge 21 in the radial direction.

The distance from central axis A to fourth position 74 in the radial direction may be greater than or equal to 1.05 times, or greater than or equal to 1.1 times the distance from fourth position 74 to fifth position 75 of outer peripheral edge 21 in the radial direction. The distance from central axis A to fourth position 74 in the radial direction may be less than or equal to two times, or less than or equal to 1.8 times the distance from fourth position 74 to fifth position 75 in the radial direction.

As shown in Fig. 4A, in the direction along central axis A, a first overall length B13 denotes a length of first discharge flute 1. First overall length B13 may be greater than or equal to two times and less than or equal to eight times the tool diameter. First overall length B13 is the total length of the length of first front flute portion 51 and the length of first rear flute portion 52. In the direction along central axis A, first overall length B13 may be greater than or equal to two times and less than or equal to seven times the tool diameter.

As shown in Fig. 4A, in the direction along central axis A, a first pocket length C1 denotes a distance from a front end of first cutting insert 10 to a rear end of first pocket portion 32. First pocket length C1 is greater than or equal to 1.5 times the tool diameter. The front end of first cutting insert 10 corresponds to the foremost end position of central edge 11. The rear end of first pocket portion 32 is a boundary between a surface of first pocket portion 32, first outer peripheral surface 4 of first body region 3, and a surface of first front flute portion 51.

In the direction along central axis A, first pocket length C1 may be greater than or equal to 1.8 times the tool diameter, or greater than or equal to two times the tool diameter. In the direction along central axis A, first pocket length C1 may be less than or equal to three times the tool diameter, or less than or equal to 2.5 times the tool diameter.

As shown in Fig. 9A, in the direction along central axis A, a second overall length B23 denotes a length of second discharge flute 2. Second overall length B23 may be greater than or equal to two times and less than or equal to eight times the tool diameter. Second overall length B23 is the total length of the length of second front flute portion 61 and the length of second rear flute portion 62. In the direction along central axis A, second overall length B23 may be greater than or equal to two times and less than or equal to seven times the tool diameter.

As shown in Fig. 9A, in the direction along central axis A, a second pocket length C2 denotes a distance from a front end of second cutting insert 20 to a rear end of second pocket portion 42. Second pocket length C2 may be smaller than first pocket length C1. The front end of second cutting insert 20 corresponds to a foremost end position of outer peripheral edge 21. The rear end of second pocket portion 42 is a boundary between a surface of second pocket portion 42, first outer peripheral surface 4 of first body region 3, and a surface of fourth front end flute portion 94. In the direction along central axis A, the rear end of first pocket portion 32 may be located rearward with respect to the axial direction of the rear end of second pocket portion 42.

As shown in Fig. 13, a third line D3 denotes a line perpendicular to central axis A. A fourth line D4 denotes a tangent of central edge 11 at second position 72.

Third line D3 passes through second position 72. A fourth angle θ4 denotes an angle formed by third line D3 and fourth line

EP 4 741 087 A1

D4. Fourth angle θ4 may be not more than 8°, not more than 6°, or not more than 4°. Fourth angle θ4 may be not less than 1°, or not less than 2°. A sine of fourth angle θ4 (that is, sinθ4) may be less than or equal to a value calculated by multiplying the tool diameter by 0.0070/mm. The sine of fourth angle θ4 may be less than or equal to a value calculated by multiplying the tool diameter by 0.0060/mm, or less than or equal to a value calculated by multiplying the tool diameter by 0.0050/mm. The sine of fourth angle θ4 may be greater than or equal to a value calculated by multiplying the tool diameter by 0.0010/mm, or greater than or equal to a value calculated by multiplying the tool diameter by 0.0020/mm. Note that the unit of fourth angle θ4 is °. The unit of the tool diameter is mm.

Next, functions and effects of drill 100 according to the present embodiment will be described.

In deep hole drilling, chips formed during the drilling remain inside the hole, and therefore clogging of the chips is likely to occur. To improve chip discharge performance, it is effective to increase helix angle θ3 of the discharge flute. However, the increase in helix angle θ3 causes an increased capacity of the discharge flute, resulting in reduced stiffness of body 9 of drill 100. As a result, drill 100 vibrates significantly during the drilling, resulting in degraded quality of the hole formed in a workpiece.

In drill 100 according to the present embodiment, body 9 is provided with first discharge flute 1 and second discharge flute 2. First discharge flute 1 discharges chips cut by central edge 11. Second discharge flute 2 discharges chips cut by outer peripheral edge 21. When viewed along central axis A, the start point phase of first discharge flute 1 falls within a range of not less than +10° and not more than +90° with respect to central edge 11, the end point phase of first discharge flute 1 falls within a range of not less than -40° and not more than 0° with respect to central edge 11, the start point phase of second discharge flute 2 falls within a range of not less than +10° and not more than +90° with respect to outer peripheral edge 21, and the end point phase of second discharge flute 2 falls within a range of not less than -40° and not more than 0° with respect to outer peripheral edge 21. First discharge flute 1 includes first front flute portion 51, and first rear flute portion 52 contiguous to first front flute portion 51. Second discharge flute 2 includes second front flute portion 61, and second rear flute portion 62 contiguous to second front flute portion 61. Helix angle θ3 of first front flute portion 51 monotonously decreases toward first rear flute portion 52. Helix angle θ3 of second front flute portion 61 monotonously decreases toward second rear flute portion 62. Helix angle θ3 of each of first rear flute portion 52 and second rear flute portion 62 is 0°. Accordingly, the chip discharge performance can be improved while the reduction in stiffness of body 9 is suppressed. As a result, the quality of a hole formed in a workpiece can be improved.

In drill 100 according to the present embodiment, at the boundary between first front flute portion 51 and first rear flute portion 52, the values each calculated by dividing the amount of change in helix angle θ3 of first discharge flute 1 by the amount of change in position in the direction along central axis A are continuous. At the boundary between second front flute portion 61 and second rear flute portion 62, the values each calculated by dividing the amount of change in helix angle θ3 of second discharge flute 2 by the amount of change in position in the direction along central axis A are continuous. Accordingly, first front flute portion 51 and first rear flute portion 52 are smoothly connected to each other, and the chips can thus be prevented from remaining in first discharge flute 1. Similarly, second front flute portion 61 and second rear flute portion 62 are smoothly connected to each other, and the chips can thus be prevented from remaining in second discharge flute 2.

Central edge 11 is located closer to central axis A than outer peripheral edge 21 in the radial direction, and therefore, central edge 11 has a cutting speed lower than a cutting speed of outer peripheral edge 21. Thus, the chips cut by central edge 11 are less likely to be discharged than the chips cut by outer peripheral edge 21. In other words, first discharge flute 1 has chip discharge performance lower than chip discharge performance of second discharge flute 2.

In drill 100 according to the present embodiment, body 9 is provided with first pocket portion 32 that is contiguous to first discharge flute 1 and that is located forward with respect to the rotational direction of first cutting insert 10. In the direction along central axis A, the distance from the front end of first cutting insert 10 to the rear end of first pocket portion 32 is greater than or equal to 1.5 times the tool diameter. The chips cut by central edge 11 in the first pocket curl. With the distance from the front end of first cutting insert 10 to the rear end of first pocket portion 32 being greater than or equal to 1.5 times the tool diameter, adequate space for the chips to curl can be ensured. Accordingly, the discharge performance of the chips cut by central edge 11 can be improved.

In drill 100 according to the present embodiment, in the direction along central axis A, each of first discharge flute 1 and second discharge flute 2 may have a length greater than or equal to two times and less than or equal to eight times the tool diameter. Accordingly, a deep hole can be formed in a workpiece.

In drill 100 according to the present embodiment, in the direction along central axis A, when first front length B11 denotes the length of first front flute portion 51, first rear length B12 denotes the length of first rear flute portion 52, second front length B21 denotes the length of second front flute portion 61, and second rear length B22 denotes the length of second rear flute portion 62, the value calculated by dividing first front length B11 by first rear length B12 may be not less than 0.3 and not more than 3.0, and the value calculated by dividing second front length B21 by second rear length B22 may be not less than 0.3 and not more than 3.0. Accordingly, the chip discharge performance can be improved while the reduction in stiffness is suppressed.

First front flute portion 51 has greater effect on the chip discharge performance than effect of first rear flute portion

9

52 on the chip discharge performance. Similarly, second front flute portion 61 has greater effect on the chip discharge performance than effect of second rear flute portion 62 on the chip discharge performance.

In drill 100 according to the present embodiment, in the cross section perpendicular to central axis A, when the first front area denotes the cross-sectional area of first front flute portion 51, the first rear area denotes the cross-sectional area of first rear flute portion 52, the second front area denotes the cross-sectional area of second front flute portion 61, and the second rear area denotes the cross-sectional area of second rear flute portion 62, the value calculated by dividing the first front area by the first rear area may be not less than 1.01 and not more than 1.02, and the value calculated by dividing the second front area by the second rear area may be not less than 1.01 and not more than 1.02. Accordingly, the chip discharge performance can be further improved while the reduction in stiffness is suppressed.

In drill 100 according to the present embodiment, in the cross section perpendicular to central axis A, first discharge flute 1 may have a cross-sectional area greater than a cross-sectional area of second discharge flute 2. Accordingly, the chip discharge performance of first discharge flute 1 can be improved while the reduction in stiffness is suppressed.

In drill 100 according to the present embodiment, in imaginary plane 150 obtained by rotating and projecting each of first cutting insert 10 and second cutting insert 20, when first position 71 denotes the foremost end position of central edge 11, second position 72 denotes the intersection of central axis A and central edge 11, and third position 73 denotes the intersection of the imaginary line segment extending from second position 72 in the direction perpendicular to central axis A and outer peripheral edge 21, the distance from central axis A to first position 71 in the radial direction extending radially from central axis A may be not less than 30% and not more than 40% of half the tool diameter, and the distance from central axis A to third position 73 in the radial direction may be not less than 80% and not more than 100% of half the tool diameter. Accordingly, cutting resistance when drill 100 bites a workpiece decreases. Therefore, diameter variation of a hole formed in the workpiece is reduced. The quality of a surface of the hole is also improved.

In drill 100 according to the present embodiment, in imaginary plane 150, when fourth position 74 denotes the intersection of central edge 11 and outer peripheral edge 21, the distance from central axis A to fourth position 74 in the radial direction may be greater than the distance from fourth position 74 to the outermost peripheral end of outer peripheral edge 21 in the radial direction. Accordingly, a cutting force of outer peripheral edge 21 and a cutting force of central edge 11 are balanced during cutting. Therefore, diameter variation of a hole formed in the workpiece is reduced.

When drill 100 bites a workpiece, a large force is generated on drill 100, which tends to cause vibration of drill 100. Reducing an angle formed by the line perpendicular to central axis A and the tangent of central edge 11 can reduce a force applied to the cutting insert when central edge 11 contacts the workpiece. Accordingly, the vibration of drill 100 can be reduced. As a result, hole diameter enlargement at an entrance of the hole formed in the workpiece can be reduced.

If the ratio between a holder protrusion length and the tool diameter is constant, the amount of displacement of the hole diameter corresponding to the hole diameter enlargement is proportional to $(\sin\theta)/(\text{tool diameter})$. The proportional constant in this case is a value determined by the material of the holder and the like, and is between 2 mm$^2$ and 200 mm$^2$. Note that $\theta$ represents the angle formed by the line perpendicular to central axis A and the tangent of central edge 11. In other words, the hole diameter enlargement at the entrance of the hole tends to increase as the tool diameter decreases. In a drill having a small tool diameter, the hole diameter enlargement can be reduced by decreasing the angle formed by the line perpendicular to central axis A and the tangent of central edge 11.

The amount of displacement ($\delta$) of the hole diameter is determined by Equation 1 below, where: $F\sin\theta$ is cutting resistance; $\theta$ is a central edge angle; L is a protrusion length; E is a Young's modulus and depends on the material; and I is a moment of inertia of area, is determined as $(\text{constant}) \times (\text{tool diameter})^4$, and depends on the cross-sectional shape.
[Math. 1]

$$\delta = \frac{F\sin\theta L^3}{3EI} \qquad \ldots \text{Equation 1}$$

The amount of displacement ($\delta_s$) of the hole diameter in the case where the tool diameter is a reference diameter (for example, 20.0 mm) is determined by Equation 2 below, where $D_S$ is a tool diameter, and $L_S$ is a protrusion length. The ratio between the protrusion length and the tool diameter is 5, for example. In addition, $\theta_S$ is a central edge angle; $F\sin\theta_S$ is cutting resistance; E is a Young's modulus; and $I_S$ is a moment of inertia of area and is determined as $(\text{constant}) \times (\text{tool diameter})^4$. In other words, $I_S$ is $(\text{constant}) \times (D_S)^4$.
[Math. 2]

$$\delta_s = \frac{F\sin\theta_s L_s^3}{3EI_s} \qquad \ldots \text{Equation 2}$$

The amount of displacement ($\delta_d$) of the hole diameter in the case where the tool diameter is a deployed diameter (for example, 25.0 mm, 15.0 mm, or the like) is determined by Equation 3 below, where $D_d$ is a tool diameter, and $L_d$ is a protrusion length. The ratio between the protrusion length and the tool diameter is constant in the case where the tool diameter is the reference diameter and in the case where the tool diameter is the deployed diameter. That is, $L_d/D_d$ is equal to $L_S/D_S$. In addition, $\theta_d$ is a central edge angle; $F\sin\theta_d$ is cutting resistance; E is a Young's modulus; and $I_d$ is a moment of inertia of area and is determined as (constant) $\times$ (tool diameter)$^4$. In other words, $I_d$ is (constant) $\times (D_d)^4$. That is, $I_d$ is $(D_d)^4/(D_s)^4 \times I_s$. As shown in Equation 3, the amount of displacement of the holder is proportional to $(\sin\theta)/$(tool diameter). Note that C is a proportional constant. Therefore, the amount of displacement of a different tool diameter (deployed diameter) can be calculated by measuring the amount of displacement of the holder having the reference diameter.

[Math. 3]

$$\delta_d = \frac{F\sin\theta_d L_d^3}{3EI_d} = \delta_s \times \frac{D_s}{\sin\theta_s} \times \frac{\sin\theta_d}{D_d} = C \times \frac{\sin\theta_d}{D_d} \qquad \ldots \text{Equation 3}$$

In drill 100 according to the present embodiment, in imaginary plane 150, the sine of the angle formed by the line perpendicular to central axis A and the tangent of central edge 11 at second position 72 may be less than or equal to a value calculated by multiplying the tool diameter by 0.0070/mm. Accordingly, the vibration of drill 100 when drill 100 bites the workpiece can be reduced. Therefore, the hole diameter enlargement can be reduced even when the tool diameter is small.

In drill 100 according to the present embodiment, body 9 may be provided with second pocket portion 42 that is contiguous to second discharge flute 2 and that is located forward with respect to the rotational direction of second cutting insert 20. In the direction along central axis A, the rear end of first pocket portion 32 may be located rearward with respect to the axial direction of the rear end of second pocket portion 42. Curl with a small curvature is required for chips cut by outer peripheral edge 21, whereas curl with a large curvature is desired for chips cut by central edge 11. The cutting process can be stabilized by adjusting the pocket width according to each chip.

<Example 1>

(Preparation of Samples)

First, drills 100 according to Sample 1 to Sample 9 were prepared. Drills 100 according to Samples 3 to 8 are examples. In the examples, each of the first end point phase and the second end point phase was not less than -40° and not more than 0°. Drills 100 according to Samples 1 to 2 and 9 are comparative examples. In the comparative examples, each of the first end point phase and the second end point phase was an angle less than -40° or an angle more than 0°. The first end point phase and the second end point phase in each sample are as indicated in Table 1.

[Table 1]

| Sample | | | Sample 1 | Sample 2 | Sample 3 | Sample 4 | Sample 5 | Sample 6 | Sample 7 | Sample 8 | Sample 9 |
|---|---|---|---|---|---|---|---|---|---|---|---|
| First and second start point phases (°) | | | 45 | 45 | 45 | 45 | 45 | 45 | 45 | 45 | 45 |
| First and second end point phases (°) | | | 15 | 5 | 0 | -5 | -15 | -20 | -25 | -35 | -45 |
| Discharge flute cross-sectional area $(mm^2)$ | Outer peripheral edge | Second front flute portion | 59.79 | 59.96 | 60.07 | 60.20 | 60.50 | 60.68 | 60.88 | 61.33 | 61.83 |
| | | Second rear flute portion | 59.68 | 59.68 | 59.68 | 59.68 | 59.68 | 59.68 | 59.68 | 59.68 | 59.68 |
| | Central edge | First front flute portion | 69.79 | 69.95 | 70.06 | 70.18 | 70.48 | 70.65 | 70.84 | 71.27 | 71.77 |
| | | First rear flute portion | 69.68 | 69.68 | 69.68 | 69.68 | 69.68 | 69.68 | 69.68 | 69.68 | 69.68 |
| Amount of displacement of tip end portion in tool center (mm) | | | 0.469 | 0.389 | 0.369 | 0.367 | 0.412 | 0.454 | 0.503 | 0.614 | 0.726 |

As shown in Table 1, in drills 100 according to Samples 1 to 9, each of the first start point phase and the second start point phase was 45°. The cross-sectional area of second front flute portion 61 was smaller than the cross-sectional area of first front flute portion 51. The cross-sectional area of second rear flute portion 62 was smaller than the cross-sectional area of first rear flute portion 52. The cross-sectional area of first front flute portion 51 was greater than the cross-sectional area of first rear flute portion 52. The cross-sectional area of second front flute portion 61 was greater than the cross-sectional area of second rear flute portion 62.

The length of first pocket portion 32 was 1.58 times the tool diameter. The cutting edge length of central edge 11 was 6.7 mm. The length of first front flute portion 51 was 49 mm. The length of first rear flute portion 52 was 45 mm. The length of second pocket portion 42 was 0.91 times the tool diameter. The cutting edge length of outer peripheral edge 21 was 6.23 mm. The length of second front flute portion 61 was 49 mm. The length of second rear flute portion 62 was 45 mm.

(Evaluation Conditions)

Next, external stress was applied to each of the cutting edge of central edge 11 and the cutting edge of outer peripheral edge 21. The external stress in a direction perpendicular to a rake face was 600 N. The external stress in the direction along central axis A was 720 N. The external stress in a direction from the cutting edge outer peripheral side toward central axis A was 100 N. The amount of displacement at a tip end portion in the center of the holder was measured in each sample. The amount of displacement of the tip end portion refers to a distance from a three-dimensional coordinate of a measurement point before the application of the external stress to a three-dimensional coordinate of a measurement point after the application of the external stress.

(Evaluation Results)

Fig. 14 is a diagram showing the amount of displacement of each of drills 100 according to Samples 1 to 9. As shown in Fig. 14, in the case where each of the first end point phase and the second end point phase was not less than -40° and not more than 15°, the amount of displacement was small. In the case where each of the first end point phase and the second end point phase was more than 0°, on the other hand, it was difficult to discharge the chips.

Based on these results, it was confirmed that the amount of displacement of the holder was small and high chip discharge performance could be attained in the case where each of the first end point phase and the second end point phase was not less than -40° and not more than 0°.

<Example 2>

(Preparation of Samples)

Next, drills 100 according to Samples 4 and 10 were prepared. Drill 100 according to Sample 4 is an example. In the example, first pocket length C1 (the length of the pocket portion on the central edge side) was greater than or equal to 1.5 times the tool diameter. Specifically, first pocket length C1 was 1.58 times the tool diameter. Drill 100 according to Sample 10 is a comparative example. In the comparative example, first pocket length C1 was less than 1.5 times the tool diameter. Specifically, first pocket length C1 was 1.01 times the tool diameter.

As shown in Table 2, in each of drills 100 according to Samples 4 and 10, each of the first start point phase and the second start point phase was 45°. Each of the first end point phase and the second end point phase was -5°. Second pocket length C2 (the length of the pocket portion on the outer peripheral edge side) was 0.91 times the tool diameter. The cutting edge length of central edge 11 was 6.7 mm. The length of first front flute portion 51 was 49 mm. The length of first rear flute portion 52 was 45 mm. The cutting edge length of outer peripheral edge 21 was 6.23 mm. The length of second front flute portion 61 was 49 mm. The length of second rear flute portion 62 was 45 mm.

[Table 2]

| Sample | | Sample 4 | Sample 10 |
|---|---|---|---|
| First and second start point phases (°) | | 45 | 45 |
| First and second end point phases (°) | | -5 | -5 |
| Length of pocket portion (mm) | Outer peripheral edge | Tool diameter × 0.91 | Tool diameter × 0.91 |
| | Central edge | Tool diameter × 1.58 | Tool diameter × 1.01 |
| Amount of displacement of tip end portion in tool center (mm) | | 0.367 | 0.358 |
| Arithmetic mean roughness Ra of hole wall surface (μm) | | 1.496 | 2.259 |

(continued)

| Sample | Sample 4 | Sample 10 |
|---|---|---|
| Root mean square roughness Rq of hole wall surface ($\mu$m) | 1.858 | 2.885 |
| Maximum height roughness Rz of hole wall surface ($\mu$m) | 9.477 | 13.18 |

(Evaluation Conditions)

Next, a hole was drilled in a workpiece with each of drills 100 according to Samples 4 and 10. As a vertical machining center, NVX 5080 manufactured by DGM MORI CO., LTD. was used. The workpiece was JIS G 4051 S50C. A peripheral speed Vc was 150 m/min. A feed rate f was 0.08 mm/rotation. Coolant was supplied from inside of drill 100. A coolant supply pressure was 2 MPa. A height profile of a wall surface was measured at a surface of the hole formed in the workpiece.

(Evaluation Results)

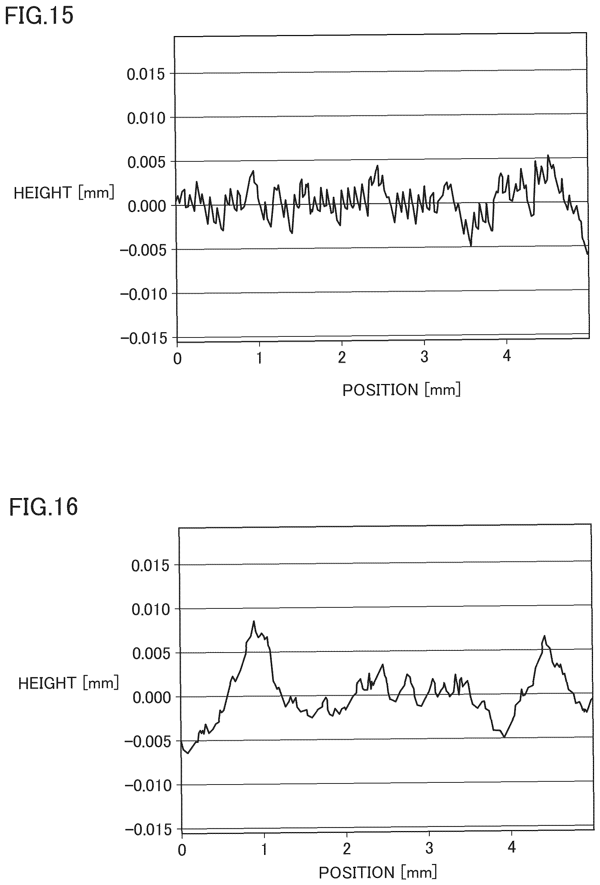

Fig. 15 is a diagram showing a height profile of a wall surface of the hole formed with drill 100 according to Sample 4. The horizontal axis of Fig. 15 represents position in a depth direction of the hole. The horizontal axis of Fig. 15 represents height of the wall surface of the hole. The hole wall surface had an arithmetic mean roughness Ra of 1.496 $\mu$m. The hole wall surface had a root mean square roughness Rq of 1.858 $\mu$m. The hole wall surface had a maximum height roughness Rz of 9.477 $\mu$m.

Fig. 16 is a diagram showing a height profile of a wall surface of the hole formed with drill 100 according to Sample 10. The horizontal axis of Fig. 16 represents position in a depth direction of the hole. The horizontal axis of Fig. 16 represents height of the wall surface of the hole. The hole wall surface had an arithmetic mean roughness Ra of 2.259 $\mu$m. The hole wall surface had a root mean square roughness Rq of 2.885 $\mu$m. The hole wall surface had a maximum height roughness Rz of 13.18 $\mu$m.

As shown in Figs. 15 and 16, it was confirmed that the surface roughnesses (Ra, Rq, Rz) of the wall surface of the hole were reduced by increasing first pocket length C1. The reduction in the surface roughnesses of the wall surface of the hole facilitates chip discharge. Accordingly, the use of drill 100 according to Sample 4 improves chip discharge performance.

<Example 3>

(Preparation of Samples)

Next, drills 100 according to Samples 4, 11 and 12 were prepared. Drills 100 according to Samples 4 and 12 are examples. In Sample 4, the tool diameter was 20 mm, and the angle formed by the line perpendicular to central axis A and central edge 11 was 8°. In Sample 12, the tool diameter was 18.5 mm, and angle $\theta$ formed by the line perpendicular to central axis A and central edge 11 was 4°. As shown in Table 3, in each of drills 100 according to Samples 4 and 12, the sine of angle $\theta$ (that is, sin$\theta$) formed by the line perpendicular to central axis A and central edge 11 was less than or equal to a value calculated by multiplying the tool diameter (mm) by 0.0070/mm.

Drill 100 according to Sample 11 is a comparative example. In Sample 11, the tool diameter was 18.5 mm, and the angle formed by the line perpendicular to central axis A and central edge 11 was 8°. In drill 100 according to Sample 11, the sine of angle $\theta$ (that is, sin$\theta$) formed by the line perpendicular to central axis A and central edge 11 was greater than the value calculated by multiplying the tool diameter (mm) by 0.0070/mm.

As shown in Table 3, in each of drills 100 according to Samples 4, 11 and 12, each of the first start point phase and the second start point phase was 45°. Each of the first end point phase and the second end point phase was -5°. Second pocket length C2 (the length of the pocket portion on the outer peripheral edge side) was 0.91 times the tool diameter. The length of first pocket portion 32 was 1.58 times the tool diameter.

[Table 3]

| Sample | Sample 4 | Sample 11 | Sample 12 |
|---|---|---|---|
| Tool diameter (mm) | 20 | 18.5 | 18.5 |
| First and second start point phases (°) | 45 | 45 | 45 |
| First and second end point phases (°) | -5 | -5 | -5 |

(continued)

| Sample | | Sample 4 | Sample 11 | Sample 12 |
|---|---|---|---|---|
| Length of pocket portion (mm) | Outer peripheral edge | Tool diameter × 0.91 | Tool diameter × 0.91 | Tool diameter × 0.91 |
| | Central edge | Tool diameter × 1.58 | Tool diameter × 1.58 | Tool diameter × 1.58 |
| Angle [θ] between line perpendicular to central axis and central edge (°) | | 8 | 8 | 4 |
| Angle between line perpendicular to central axis and outer peripheral edge (°) | | 2 | 2 | 2 |
| Amount of displacement (mm) (Proportional constant is fixed value) | | 0.0069 × (Proportional constant) | 0.0075 × (Proportional constant) | 0.0038 × (Proportional constant) |
| $\sin\theta$ | | 0.139 | 0.139 | 0.0698 |
| Tool diameter (mm) × 0.0070/mm | | 0.140 | 0.130 | 0.130 |
| Hole diameter at hole entrance (mm) | | 20.2 | 20.0 | 18.8 |
| Hole diameter at deep position in hole (mm) | | 20.1 | 18.8 | 18.8 |
| Hole diameter enlargement at hole entrance (mm) | | 0.1 | 1.2 | 0.0 |
| Cutting resistance at hole entrance (N) | | 550 | 750 | 500 |

(Evaluation Conditions)

Next, a hole was drilled in a workpiece 80 with each of drills 100 according to Samples 4, 11 and 12. As a vertical machining center, NVX 5080 manufactured by DGM MORI CO., LTD. was used. The workpiece was JIS G 4051 S50C. Peripheral speed Vc was 150 m/min. Feed rate f was 0.06 mm/rotation. Coolant was supplied from inside of drill 100. The coolant supply pressure was 2 MPa.

(Evaluation Results)

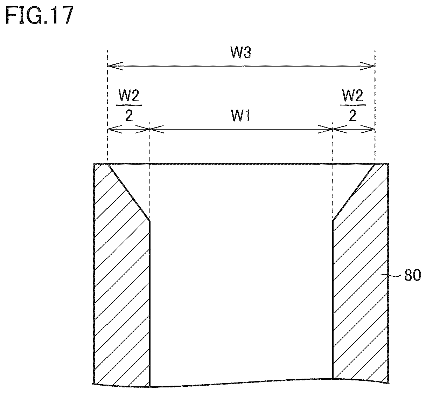

Fig. 17 is a schematic cross-sectional view showing a shape of the hole formed with each of drills 100 according to Samples 4, 11 and 12. As shown in Fig. 17, the diameter of the hole is enlarged at an entrance of the hole formed in workpiece 80. The hole diameter at a deep position in the hole is a first diameter W1. First diameter W1 is substantially equal to the tool diameter. The hole diameter at the entrance is a third diameter W3. Third diameter W3 is greater than first diameter W1.

As shown in Table 1, first diameter W1 at a deep position in the hole formed with each of drills 100 according to Samples 4, 11 and 12 was 20.1 mm, 18.8 mm and 18.8 mm, respectively. Third diameter W3 at the entrance of the hole formed with each of drills 100 according to Samples 4, 11 and 12 was 20.2 mm, 20.0 mm and 18.8 mm, respectively. A hole diameter enlargement W2, which is the difference between third diameter W3 and first diameter W1, was 0.1 mm, 1.2 mm and 0.0 mm, respectively. Cutting resistance at the entrance of the hole formed with each of drills 100 according to Samples 4, 11 and 12 was 550 N, 750 N and 500 N, respectively.

Based on these results, it was confirmed that each of the cutting resistance and hole diameter enlargement W2 at the entrance of the hole could be reduced by setting the sine of angle θ (that is, sinθ) formed by the line perpendicular to central axis A and central edge 11 to be less than or equal to the value calculated by multiplying the tool diameter by 0.0070/mm.

It should be understood that the embodiments and examples disclosed herein are illustrative and non-restrictive in every respect. The scope of the present invention is defined by the terms of the claims, rather than the description above, and is intended to include any modifications within the meaning and scope equivalent to the terms of the claims.

REFERENCE SIGNS LIST

1 first discharge flute; 2 second discharge flute; 3 first body region; 4 first outer peripheral surface; 5 shank; 6 second body region; 7 coolant supply hole; 9 body; 10 first cutting insert; 11 central edge; 19 central edge attachment screw; 20 second cutting insert; 21 outer peripheral edge; 29 outer peripheral edge attachment screw; 31 first insert placement surface portion; 32 first pocket portion; 33 first insert placement groove; 41 second insert placement surface portion; 42 second pocket portion; 43 second insert placement groove; 51 first front flute portion; 52 first rear flute portion; 54 first rear end flute portion; 55 first start point position; 56 first end point position; 57 first boundary; 61 second front flute portion; 62 second rear flute portion; 64 second rear end flute portion; 65 second start point position; 66 second end point position; 67 second boundary; 71 first position; 72 second position; 73 third position; 74 fourth position; 75 fifth position; 80 workpiece; 91 first front end flute portion; 92 second front end flute portion; 93 third front end flute portion; 94 fourth front end flute portion; 100 drill; 101 front end surface; 102 rear end surface; 150 imaginary plane; A central axis; B11 first front length; B12 first rear length; B13 first overall length; B21 second front length; B22 second rear length; B23 second overall length; C1 first pocket length; C2 second pocket length; D11 eleventh half line; D12 twelfth half line; D13 thirteenth half line; D21 twenty-first half line; D22 twenty-second half line; D23 twenty-third half line; D3 third line; D4 fourth line; E tool diameter; F1 first imaginary arc; F2 second imaginary arc.

**Claims**

1.  A drill that rotates about a central axis, the drill comprising:

    a first cutting insert having a central edge;
    a second cutting insert having an outer peripheral edge; and
    a body to which the first cutting insert and the second cutting insert are attached, wherein
    the body is provided with a first discharge flute that discharges chips cut by the central edge, and a second discharge flute that discharges chips cut by the outer peripheral edge,
    when viewed along the central axis,

    a start point phase of the first discharge flute falls within a range of not less than +10° and not more than +90° with respect to the central edge,
    an end point phase of the first discharge flute falls within a range of not less than -40° and not more than 0° with respect to the central edge,
    a start point phase of the second discharge flute falls within a range of not less than +10° and not more than +90° with respect to the outer peripheral edge, and
    an end point phase of the second discharge flute falls within a range of not less than -40° and not more than 0° with respect to the outer peripheral edge,

    the first discharge flute includes a first front flute portion, and a first rear flute portion contiguous to the first front flute portion,
    the second discharge flute includes a second front flute portion, and a second rear flute portion contiguous to the second front flute portion,
    a helix angle of the first front flute portion monotonously decreases toward the first rear flute portion,
    a helix angle of the second front flute portion monotonously decreases toward the second rear flute portion,
    a helix angle of each of the first rear flute portion and the second rear flute portion is 0°,
    at a boundary between the first front flute portion and the first rear flute portion, values each calculated by dividing an amount of change in the helix angle of the first discharge flute by an amount of change in position in a direction along the central axis are continuous,
    at a boundary between the second front flute portion and the second rear flute portion, values each calculated by dividing an amount of change in the helix angle of the second discharge flute by an amount of change in position in the direction along the central axis are continuous,
    the body is provided with a first pocket portion that is contiguous to the first discharge flute and that is located forward with respect to a rotational direction of the first cutting insert, and
    in the direction along the central axis, a distance from a front end of the first cutting insert to a rear end of the first pocket portion is greater than or equal to 1.5 times a tool diameter.

2.  The drill according to claim 1, wherein in the direction along the central axis, each of the first discharge flute and the second discharge flute has a length greater than or equal to two times and less than or equal to eight times the tool diameter.

3.  The drill according to claim 1 or 2, wherein in the direction along the central axis, when a first front length denotes a length of the first front flute portion, a first rear length denotes a length of the first rear flute portion, a second front length denotes a length of the second front flute portion, and a second rear length denotes a length of the second rear flute portion, a value calculated by dividing the first front length by the first rear length is not less than 0.3 and not more than 3.0, and a value calculated by dividing the second front length by the second rear length is not less than 0.3 and not more than 3.0.

4. The drill according to any one of claims 1 to 3, wherein in a cross section perpendicular to the central axis, when a first front area denotes a cross-sectional area of the first front flute portion, a first rear area denotes a cross-sectional area of the first rear flute portion, a second front area denotes a cross-sectional area of the second front flute portion, and a second rear area denotes a cross-sectional area of the second rear flute portion, a value calculated by dividing the first front area by the first rear area is not less than 1.01 and not more than 1.02, and a value calculated by dividing the second front area by the second rear area is not less than 1.01 and not more than 1.02.

5. The drill according to any one of claims 1 to 4, wherein in a cross section perpendicular to the central axis, the first discharge flute has a cross-sectional area greater than a cross-sectional area of the second discharge flute.

6. The drill according to any one of claims 1 to 5, wherein in an imaginary plane obtained by rotating and projecting each of the first cutting insert and the second cutting insert, when a first position denotes a foremost end position of the central edge, a second position denotes an intersection of the central axis and the central edge, and a third position denotes an intersection of an imaginary line segment extending from the second position in a direction perpendicular to the central axis and the outer peripheral edge, a distance from the central axis to the first position in a radial direction extending radially from the central axis is not less than 30% and not more than 40% of half the tool diameter, and a distance from the central axis to the third position in the radial direction is not less than 80% and not more than 100% of half the tool diameter.

7. The drill according to claim 6, wherein in the imaginary plane, when a fourth position denotes an intersection of the central edge and the outer peripheral edge, a distance from the central axis to the fourth position in the radial direction is greater than a distance from the fourth position to an outermost peripheral end of the outer peripheral edge in the radial direction.

8. The drill according to claim 6 or 7, wherein

in the imaginary plane, a sine of an angle formed by a line perpendicular to the central axis and a tangent of the central edge at the second position is less than or equal to a value calculated by multiplying the tool diameter by 0.0070/mm, and

a unit of the angle is °, and a unit of the tool diameter is mm.

9. The drill according to any one of claims 1 to 8, wherein

the body is provided with a second pocket portion that is contiguous to the second discharge flute and that is located forward with respect to the rotational direction of the second cutting insert, and

in the direction along the central axis, the rear end of the first pocket portion is located rearward with respect to an axial direction of a rear end of the second pocket portion.

FIG.1

FIG.2

FIG.3

REARWARD WITH
RESPECT TO
ROTATIONAL
DIRECTION

FORWARD WITH
RESPECT TO
ROTATIONAL
DIRECTION

FIG.4A

FORWARD WITH RESPECT
TO AXIAL DIRECTION ⟶ REARWARD WITH RESPECT
TO AXIAL DIRECTION

FIG.4B

FORWARD WITH RESPECT TO AXIAL DIRECTION ⟷ REARWARD WITH RESPECT TO AXIAL DIRECTION

FIG.5

REARWARD WITH
RESPECT TO
ROTATIONAL
DIRECTION

FORWARD WITH
RESPECT TO
ROTATIONAL
DIRECTION

FIG.6

REARWARD WITH
RESPECT TO
ROTATIONAL
DIRECTION

FORWARD WITH
RESPECT TO
ROTATIONAL
DIRECTION

FIG.7

REARWARD WITH
RESPECT TO
ROTATIONAL
DIRECTION

FORWARD WITH
RESPECT TO
ROTATIONAL
DIRECTION

A

4

6

61
62

2

D12

θ 12

D13

θ 11

64

D11

54

52    51

7

1

FIG.8

REARWARD WITH
RESPECT TO
ROTATIONAL
DIRECTION

FORWARD WITH
RESPECT TO
ROTATIONAL
DIRECTION

# FIG.9A

FORWARD WITH RESPECT TO AXIAL DIRECTION ←——→ REARWARD WITH RESPECT TO AXIAL DIRECTION

FIG.9B

FORWARD WITH RESPECT
TO AXIAL DIRECTION ←——→ REARWARD WITH RESPECT
TO AXIAL DIRECTION

EP 4 741 087 A1

FIG.10

REARWARD WITH
RESPECT TO
ROTATIONAL
DIRECTION

FORWARD WITH
RESPECT TO
ROTATIONAL
DIRECTION

FIG.11

REARWARD WITH
RESPECT TO
ROTATIONAL
DIRECTION

FORWARD WITH
RESPECT TO
ROTATIONAL
DIRECTION

6

54

64

7

FIG.12

TOOL RADIUS
×30%

TOOL RADIUS
×40%

FIG.13

TOOL RADIUS
×80%

TOOL RADIUS
×100%

$\dfrac{E}{2}$

E

FIG.14

AMOUNT OF
DISPLACEMENT
[mm]

FIRST END POINT PHASE AND
SECOND END POINT PHASE [°]

FIG.15

FIG.16

FIG.17

# INTERNATIONAL SEARCH REPORT

| International application No. |
| --- |
| **PCT/JP2024/021696** |

| A. | CLASSIFICATION OF SUBJECT MATTER |
| --- | --- |

***B23B 51/00***(2006.01)i
FI: B23B51/00 L

According to International Patent Classification (IPC) or to both national classification and IPC

| B. | FIELDS SEARCHED |
| --- | --- |

Minimum documentation searched (classification system followed by classification symbols)

B23B51/00-51/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2013-27962 A (KYOCERA CORPORATION) 07 February 2013 (2013-02-07) | 1-9 |
| A | US 2008/0170921 A1 (SANDVIK INTELLECTUAL PROPERTY AB) 17 July 2008 (2008-07-17) | 1-9 |
| A | JP 2021-100772 A (KYOCERA CORPORATION) 08 July 2021 (2021-07-08) | 1-9 |
| A | JP 2012-206216 A (MITSUBISHI MATERIALS CORPORATION) 25 October 2012 (2012-10-25) | 1-9 |
| A | JP 2006-205285 A (TUNGALOY CORPORATION) 10 August 2006 (2006-08-10) | 1-9 |
| A | JP 2010-264531 A (MITSUBISHI MATERIALS CORPORATION) 25 November 2010 (2010-11-25) | 1-9 |
| A | JP 2009-262319 A (MITSUBISHI MATERIALS CORPORATION) 12 November 2009 (2009-11-12) | 1-9 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 July 2024** | **23 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/021696**

| Patent document cited in search report | | | Publication date (day/month/year) | Patent family member(s) | | | Publication date (day/month/year) |
|---|---|---|---|---|---|---|---|
| JP | 2013-27962 | A | 07 February 2013 | (Family: none) | | | |
| US | 2008/0170921 | A1 | 17 July 2008 | WO | 2008/088264 | A1 | |
| JP | 2021-100772 | A | 08 July 2021 | (Family: none) | | | |
| JP | 2012-206216 | A | 25 October 2012 | (Family: none) | | | |
| JP | 2006-205285 | A | 10 August 2006 | (Family: none) | | | |
| JP | 2010-264531 | A | 25 November 2010 | (Family: none) | | | |
| JP | 2009-262319 | A | 12 November 2009 | US | 2009/0245949 | A1 | |
| | | | | EP | 2106868 | A2 | |
| | | | | CN | 101549413 | A | |
| | | | | KR | 10-2009-0104682 | A | |

Form PCT/ISA/210 (patent family annex) (July 2022)

**REFERENCES CITED IN THE DESCRIPTION**

**Patent documents cited in the description**

- JP 2023025141 W
- WO 2013018764 A